# FASCICULE DE BREVET EUROPEEN

(11) **EP 4 609 383 B1**
(45) Date de publication et mention de la délivrance du brevet: **15.07.2026**
(21) Numéro de dépôt: 23805635.2
(22) Date de dépôt: 23.10.2023
(51) Int. Cl.: G10K 11/168, G10K 11/172

(54) **PANNEAU D'ATTENUATION ACOUSTIQUE OPTIMISE POUR UNE TURBOMACHINE D'AERONEF**
OPTIMIERTE SCHALLDÄMPFUNGSPLATTE FÜR EINE FLUGZEUGTURBOMASCHINE
OPTIMISED SOUND ATTENUATION PANEL FOR AN AIRCRAFT TURBOMACHINE

(30) Priorité: 27.10.2022 FR 2211216
(43) Date de publication de la demande: 03.09.2025
(73) Titulaire: Safran Nacelles, 76700 Gonfreville-l'Orcher (FR)
(72) Inventeur: VERSAEVEL, Marc, 77550 Moissy-Cramayel (FR); MOUTIER, John, 77550 Moissy-Cramayel (FR)
(74) Mandataire: Gevers & Orès
(86) Numéro de dépôt international: PCT/FR2023/051653
(87) Numéro de publication internationale: WO 2024/089349

(56) Documents cités:
- EP-B1- 2 788 601
- US-A1- 2012 168 248

## Description

### Domaine technique de l'invention

L'invention concerne un panneau d'atténuation acoustique pour une turbomachine d'aéronef, et un procédé pour la fabrication d'un tel panneau.

### Arrière-plan technique

L'état de la technique comporte les documents EP-2.478.202-B1, US-9.514.734-B1, WO-2006/107.533-A2, US-2012/168248-A1 et EP-2.788.601-B1.

Les panneaux d'atténuation acoustique sont largement utilisés dans les turbomachines pour l'habillage de zones soumises à des passages de gaz important, comme par exemple une entrée d'air, un carter de soufflante ou une veine de flux secondaire située en aval de la soufflante dans lesquels circule de l'air, ou une tuyère d'échappement ou un cône d'échappement de la turbomachine, plus connu sous l'acronyme anglo-saxon de « plug », soumis à un passage de gaz d'échappement.

Ces panneaux d'atténuation acoustique sont généralement réalisés sous la forme de sandwichs comportant au moins une première peau externe, une seconde peau interne, et une âme emprisonnée entre ces première et seconde peaux. L'âme comporte une pluralité de cellules polygonales tubulaires qui ont chacune une orientation perpendiculaire aux première et deuxième peaux. Ces âmes sont généralement réalisées sous la forme d'une plaque de matériau en nid d'abeille à cellules hexagonales. Ces cellules sont creuses sur toute leur longueur.

La hauteur des cellules est déterminante en ce qui concerne la capacité du panneau à absorber les ondes sonores. En effet, la première peau, aussi appelée peau acoustique perméable, comporte une pluralité de trous qui débouchent à l'intérieur des cellules. La deuxième peau est appelée peau acoustiquement réfléchissante. Or, on a démontré que l'absorption des ondes sonores était optimale lorsque les cellules ont une hauteur entre ces deux peaux correspondant sensiblement au quart de la longueur d'onde de l'onde sonore à traiter.

Actuellement, pour des raisons d'intégration et de compacité, il est souhaitable de réaliser des panneaux d'atténuation acoustique plus minces que les panneaux conventionnels. Or, il n'est pas possible de réduire la hauteur des cellules sans que cela entraîne une perte de la capacité du panneau à absorber les ondes sonores dans les fréquences cibles.

Il existe donc un réel besoin pour un panneau d'atténuation acoustique plus mince qu'un panneau conventionnel et conservant toutefois le même niveau d'atténuation acoustique.

### Résumé de l'invention

L'invention satisfait à ce besoin en proposant un panneau d'atténuation acoustique dans lequel les cellules sont de hauteur réduite et pourvues chacune d'au moins une cloison interne permettant d'offrir à l'onde sonore un cheminement dans la cellule qui est de même longueur qu'une cellule conventionnelle.

Dans ce but, l'invention propose un panneau d'atténuation acoustique pour une turbomachine d'aéronef, ledit panneau comportant une première peau, une deuxième peau, et une âme prise en sandwich entre les première et deuxième peaux, ladite âme comportant une pluralité de cellules polygonales tubulaires qui ont chacune une orientation perpendiculaire aux première et deuxième peaux, chaque cellule comportant une cavité interne qui communique avec au moins un trou formé dans ladite première peau et qui est délimitée par des parois latérales s'étendant entre les première et deuxième peaux et perpendiculairement aux première et deuxième peaux, ces parois latérales ayant une première hauteur égale à une distance entre les première et deuxième peaux, caractérisé ce que chaque cellule polygonale comporte en outre au moins une cloison interne à l'intérieur de sa cavité, cette cloison interne s'étendant sensiblement à partir de la première peau perpendiculairement aux première et deuxième peaux selon une deuxième hauteur inférieure à la première hauteur, et transversalement dans la cavité entre deux parois latérales de la cellule, cette cloison interne divisant la cavité en au moins deux poches adjacentes et délimitant entre une extrémité libre de ladite cloison et la deuxième paroi un passage permettant aux deux poches adjacentes de communiquer entre elles et avec ledit trou.

Le panneau d'atténuation acoustique selon l'invention permet de proposer aux ondes sonores un cheminement de même longueur qu'un panneau conventionnel en faisant cheminer l'onde le long de deux poches de même longueur. Cette configuration permet de doter le panneau de cellules de première hauteur deux fois moindre qu'un panneau conventionnel, avec les mêmes capacités d'absorption acoustique que celui-ci.

Selon d'autres caractéristiques du panneau :
- ladite au moins une cloison interne s'étend transversalement entre des faces internes de deux parois latérales sensiblement opposées de la cellule,
- ladite au moins une cloison interne s'étend transversalement entre une arête de jonction de première et deuxième parois latérales et une troisième paroi latérale sensiblement opposée aux première et deuxième parois latérales,
- ladite au moins une cloison interne s'étend transversalement entre une arête de jonction de première et deuxième parois latérales et une arête de jonction de troisième et quatrième parois latérales,
- chaque cellule polygonale est une cellule polygonale régulière ayant un axe central et elle comporte au moins deux cloisons jointives selon ledit axe central,
- chaque cellule polygonale est une cellule hexagonale,
- chaque cellule comporte autant de cloisons internes jointives selon l'axe central que de parois latérales,
- chaque cellule comporte un nombre pair de parois latérales et les cloisons internes s'étendent transversalement entre ledit axe et les arêtes de jonction des parois latérales en délimitant autant de poches communiquant les unes avec les autres que de parois latérales.
- chaque cellule comporte un nombre pair de parois latérales, deux fois moins de cloisons que de parois latérales, et des parois internes de même première hauteur que les parois latérales, qui alternent autour de l'axe central avec lesdites cloisons de manière à délimiter des paires de poches adjacentes communicantes, chaque paire de poches communicantes étant isolée des autres paires de poches communicantes et communiquant avec un trou de la première peau, les paires de poches communicantes étant en nombre deux fois inférieur au nombre de parois latérales,
- la première hauteur est égale au huitième d'une longueur d'onde d'un son à atténuer,
- les cellules de l'âme, les parois latérales, et l'au moins une cloison interne sont obtenues par un procédé de fabrication additive.
- les cellules de l'âme et les parois latérales sont obtenues par extrusion d'un matériau plastique, l'au moins une cloison interne est obtenue aussi par extrusion d'un matériau plastique, et l'au moins une cloison interne est soudée dans chaque cellule,
- les cellules de l'âme sont obtenues par fourniture d'un matériau en nid d'abeilles conventionnel dans lequel on dispose au moins un insert formant l'au moins une cloison,
- la première hauteur est comprise entre 20 et 50 mm,
- la deuxième hauteur est supérieure à la moitié de la première hauteur et au moins inférieure ou égale de 5mm à la première hauteur.

L'invention concerne aussi un procédé de fabrication d'un panneau d'atténuation du type décrit précédemment, caractérisé en ce qu'il comporte :
- une première étape de fabrication d'une première peau,
- une deuxième étape de fabrication d'une deuxième peau,
- une troisième étape de fabrication de l'âme par fabrication additive, par extrusion et soudage, ou par fourniture d'un matériau en nid d'abeilles conventionnel dans lequel on dispose au moins un insert formant l'au moins une cloison,
- une quatrième étape de fixation des première et deuxième peaux à l'âme par soudage, brasage, ou collage,
- une cinquième étape de perçage de la première peau réalisant dans ladite première peau des trous qui débouchent chacun dans une poche d'une cellule polygonale de l'âme.

L'invention concerne enfin une turbomachine, caractérisée en ce qu'elle comporte au moins une veine de flux gazeux délimitée par au moins une paroi comportant un panneau d'atténuation du type décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique des emplacements de panneaux d'atténuation acoustique dans une turbomachine et sa nacelle ;
[Fig. 2] La figure 2 est une vue en perspective d'un panneau d'atténuation acoustique conventionnel ;
[Fig. 3] La figure 3 est une vue en perspective d'une âme d'un panneau d'atténuation acoustique conventionnel ;
[Fig. 4] La figure 4 est une vue en perspective d'une cellule à section hexagonale d'une âme d'un panneau d'atténuation acoustique selon l'invention ;
[Fig. 5] La figure 5 est une autre vue en perspective d'une cellule à section hexagonale d'une âme d'un panneau d'atténuation acoustique selon l'invention ;
[Fig. 6] La figure 6 est une vue en perspective d'une première extrémité d'une cellule à section hexagonale d'une âme d'un panneau d'atténuation acoustique selon l'invention ;
[Fig. 7] La figure 7 est une vue en perspective d'une seconde extrémité d'une cellule à section hexagonale d'une âme d'un panneau d'atténuation acoustique selon l'invention ;
[Fig. 8a] La figure 8a est une vue de dessus d'un premier mode de réalisation de la première extrémité d'une cellule à section hexagonale d'une âme d'un panneau d'atténuation acoustique selon l'invention ;
[Fig. 8b] La figure 8b est une vue de dessus d'un deuxième mode de réalisation de la première extrémité d'une cellule à section hexagonale d'une âme d'un panneau d'atténuation acoustique selon l'invention ;
[Fig. 8c] La figure 8c est une vue de dessus d'un troisième mode de réalisation de la première extrémité d'une cellule à section hexagonale d'une âme d'un panneau d'atténuation acoustique selon l'invention ;
[Fig. 8d] La figure 8d est une vue de dessus d'un quatrième mode de réalisation de la première extrémité d'une cellule à section hexagonale d'une âme d'un panneau d'atténuation acoustique selon l'invention ;
[Fig. 9] La figure est une vue en perspective de la cellule à section hexagonale de la figure 8d ;
[Fig. 10] La figure 10 est une vue en perspective d'une cellule à section rectangulaire d'une âme d'un panneau d'atténuation acoustique selon l'invention ;
[Fig. 11] La figure 11 est un diagramme-bloc illustrant les étapes d'un premier mode de réalisation d'un procédé de fabrication d'un panneau d'atténuation acoustique selon l'invention ;
[Fig. 12] La figure 12 est un diagramme-bloc illustrant les étapes d'un second mode de réalisation d'un procédé de fabrication d'un panneau d'atténuation acoustique selon l'invention.

### Description détaillée de l'invention

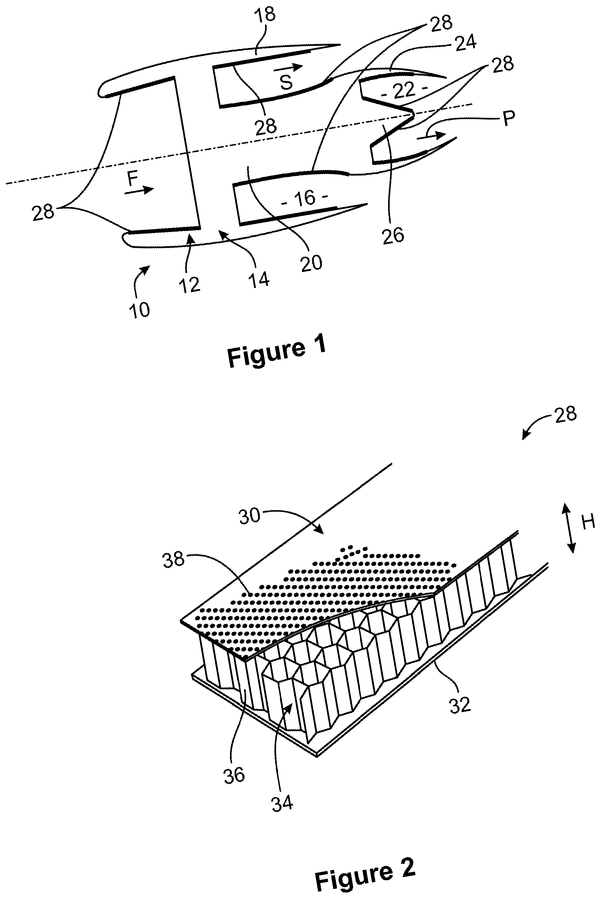

On a représenté à la figure 1 de manière schématique une turbomachine 10. De manière connue, la turbomachine 10 comporte, d'amont en aval, une entrée d'air 12, un carter 14, un canal de flux secondaire 16 délimité par une paroi interne 20 et une paroi externe 18, et un canal de flux primaire 22 qui est délimitée par un carter d'échappement 24 et par un cône d'échappement 26, aussi connu sous l'acronyme anglo-saxon de « plug ».

L'entrée d'air 12 est traversée par un flux d'air entrant F, le canal de flux secondaire 16 est traversé par un flux d'air secondaire S et la tuyère 22 permet l'éjection d'un flux de gaz primaire P.

Les parties tournantes du moteur sont des sources de bruit importantes. Le bruit issu de la soufflante se propage vers l'amont à contre-courant du flux F dans l'entrée d'air 12 ou vers l'aval dans la direction du flux S dans le veine secondaire 16. Le bruit issu de la turbine se propage dans le flux P à travers la tuyère 22. Pour y remédier, l'entrée d'air 12, le carter moteur 14, le canal de flux secondaire 16 et la tuyère 22 peuvent voir leurs parois recouvertes de panneaux d'atténuation acoustique. Ainsi l'entrée d'air 12, les parois 18 et 20 du flux secondaire, le carter d'échappement 24 et le cône d'échappement 26 peuvent être recouverts par des panneaux d'atténuation acoustique 28.

Comme l'illustre la figure 2, un tel panneau 28 est généralement réalisé sous la forme d'un sandwich comportant dans sa plus simple expression au moins une première peau 30 orientée du côté du flux d'air entrant F, du flux primaire P ou du Flux secondaire S, une seconde peau 32, et au moins une âme 34. Bien entendu, le sandwich peut comporter d'autres couches intermédiaires et notamment d'autres âmes superposées à l'âme 34.

La première peau 30 comporte des trous ou perforations 38 et est appelée peau acoustique perméable. La seconde peau 32 est fermée et est appelée peau acoustiquement réfléchissante.

L'âme 34 comporte une pluralité de cellules polygonales 36 tubulaires qui ont chacune une orientation selon un axe A perpendiculaire aux première et deuxième peaux. Cette âme 34 est généralement réalisée sous la forme d'une plaque de matériau en nid d'abeille à cellules hexagonales 36, qui sont creuses sur toute leur hauteur H, cette hauteur H correspondant à la distance entre les première et seconde peau 30, 32. La première peau 30 comporte une pluralité des trous ou perforations 38 qui débouchent à l'intérieur des cellules 36. Les ondes sonores pénètrent donc dans les cellules 36 par ces trous ou perforations 38.

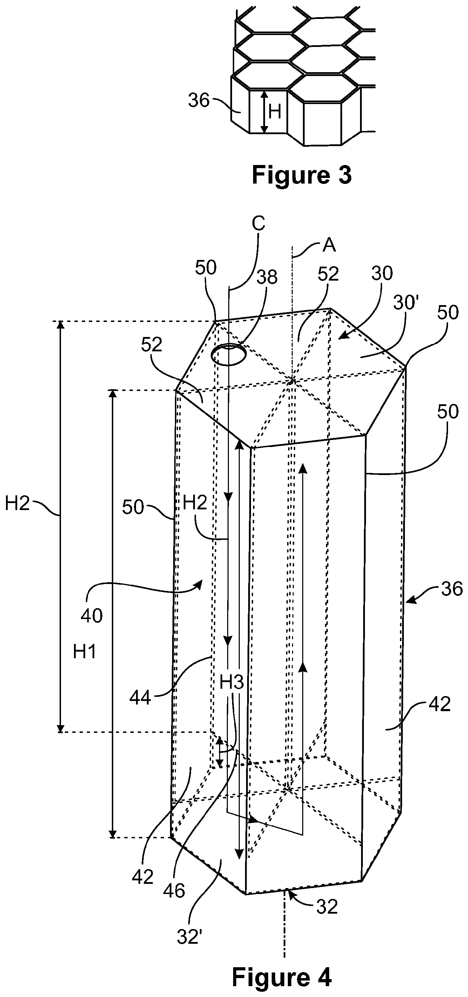

Comme l'illustre la figure 3, la hauteur H des cellules 36 est un paramètre essentiel qui détermine la capacité du panneau 28 à absorber les ondes sonores. On a effet démontré que l'absorption des ondes sonores était optimale pour un panneau 28 conventionnel lorsque les cellules 36 ont une hauteur H correspondant sensiblement au quart de la longueur d'onde λ de l'onde sonore à traiter.

Or, pour des raisons d'intégration et de compacité, il est souhaitable de réaliser des panneaux d'atténuation acoustique qui sont plus minces que les panneaux conventionnels. Or, il n'est pas possible de réduire la hauteur des cellules 36 sans que cela modifie le comportement fréquentiel du panneau 28. En effet, toute réduction de la hauteur H de l'âme 34 a pour conséquence de décaler le pic d'atténuation du panneau vers des fréquences plus élevées qui dès lors ne font plus partie de la plage de fréquences cibles.

La capacité d'une cellule à absorber une onde acoustique de longueur d'onde λ est directement tributaire de la longueur du chemin parcouru par l'onde acoustique dans la cellule 36, c'est-à-dire, d'après ce qui précède, une longueur correspondant au quart de la longueur d'onde, soit λ/4. Toutefois on a aussi constaté que la longueur de ce chemin ne doit pas nécessairement être limitée à un chemin rectiligne, en l'occurrence sur la hauteur H de la cellule 36. En d'autres termes, l'onde acoustique peut être efficacement absorbée tant que le chemin parcouru est d'une longueur totale proche de λ/4, mais cette longueur peut être répartie suivant un chemin non rectiligne.

L'invention propose donc avantageusement un panneau d'atténuation 28 acoustique qui est plus mince qu'un panneau conventionnel et qui conserve toutefois le même niveau d'atténuation acoustique et la même plage de fréquences cibles. Les cellules 36 de ce panneau sont partiellement cloisonnées pour répartir le chemin des ondes acoustiques suivant une première hauteur H1 de la cellule mais dans au moins deux poches adjacentes, et dans ce cas la première hauteur H1 peut dès lors être réduite par rapport à une cellule conventionnelle.

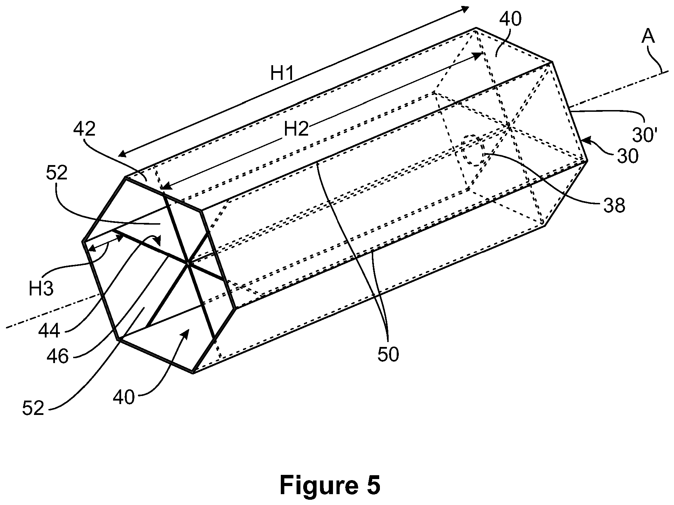

Une cellule 36 pour un panneau conforme à l'invention a été représentée aux figures 4 à 7 et 9. Ces figures représentent une cellule 36 unitaire prise en sandwich entre une partie correspondante 30' de la première peau 30 et une partie correspondante 32' de la seconde peau 32, étant entendu que les cellules 36 sont toutes obtenues en une seule opération de fabrication. La cellule 36 qui a été représentée ici est de section hexagonale, mais il sera compris que cette disposition n'est pas limitative de l'invention, et l'invention trouve à s'appliquer à toute cellule de section polygonale, c'est-à-dire triangulaire, carrée, rectangulaire, pentagonale, octogonale, régulière ou irrégulière.

Chaque cellule 36 comporte une cavité interne 40 qui communique avec au moins un des trous 38 formé dans la première peau 30 et qui est délimitée par des parois latérales 42 s'étendant entre les première et deuxième peaux 30, 32 et perpendiculairement aux première et deuxième peaux 30, 32. Ces parois latérales 42 ont une première hauteur H1 égale à une distance entre les première et deuxième peaux 30, 32.

Conformément à l'invention, chaque cellule polygonale 36 comporte en outre au moins une cloison interne 44 à l'intérieur de la cavité 40. La cloison interne 44 s'étend sensiblement vers la deuxième peau 32 à partir de la première peau 30, perpendiculairement aux première et deuxième peaux 30, 32, selon une deuxième hauteur H2 inférieure à la première hauteur H1. Elle délimite de ce fait un passage de troisième hauteur H3 entre l'extrémité libre 46 de la cloison 44 et la deuxième peau 32.

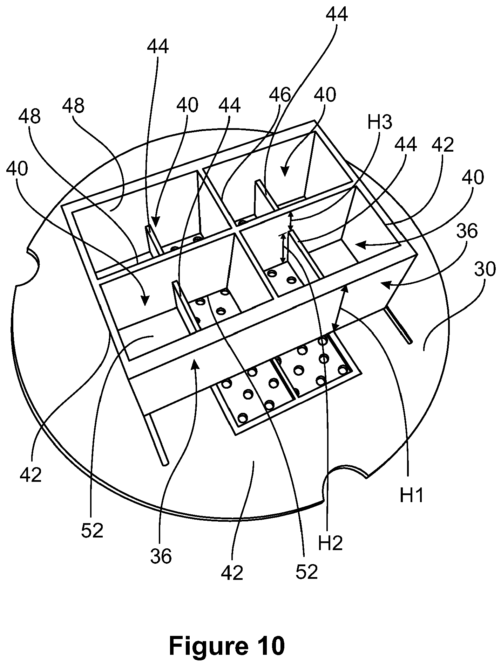

L'au moins une cloison 44 s'étend transversalement dans la cavité 40 entre deux parois latérales 42 de la cellule 36, que ce soit entre des parties intermédiaires des parois latérales 42, comme représenté à la figure 10 ou entre des arêtes 50 de jonction des parois latérales 42, comme on peut le voir aux figure 4 à 8c.

De ce fait, l'au moins une cloison 44 divise la cavité 40 en au moins deux poches adjacentes 52. Le passage entre l'extrémité libre 46 de la cloison 44 et la deuxième paroi 32 permet aux deux poches adjacentes 52 de communiquer entre elles et avec le trou 38, comme l'illustrent les flèches qui illustrent la circulation C des ondes sonores sur les figures 4, 8a-8d et 9.

Sur la figure 10, on a représenté un groupe de quatre cellules 36 de sections rectangulaires délimitant quatre cavités 40, chaque cavité 40 recevant une cloison 44 du type décrit précédemment.

Les cloisons 44 peuvent s'étendre transversalement de différentes façons dans les cavités 40. Par exemple, comme l'illustre la figure 10, chaque cloison interne 44 s'étend transversalement entre des faces internes 48 de deux parois latérales 42 sensiblement opposées de la cellule 36. Cette configuration est particulièrement adaptée à une cellule 36 ayant un nombre pair de parois latérales 42.

En variante (non représentée), la au moins une cloison interne 44 pourrait s'étendre transversalement entre une arête de jonction de première et deuxième parois latérales et une troisième paroi latérale sensiblement opposée aux première et deuxième parois latérales. Cette configuration est particulièrement adaptée à une cellule 36 ayant un nombre impair de parois, comme une cellule triangulaire ou pentagonale.

Encore en variante, l'au moins une cloison interne 44 peut s'étendre transversalement entre une arête de jonction de première et deuxième parois latérales 42 et une autre arête de jonction de troisième et quatrième parois latérales 42.

Un cas particulier de cette configuration de cellule 36 est celui d'une cellule 36 polygonale régulière ayant un axe central A.

Dans ce cas, la cellule 36 ne comporte pas une mais au moins deux cloisons 44 jointives selon l'axe central A. La cellule 36 peut comporter autant de cloisons internes 44 jointives selon l'axe central 44 que de parois latérales 42, que la cellule 36 ait ou non un nombre pair de parois latérales 42.

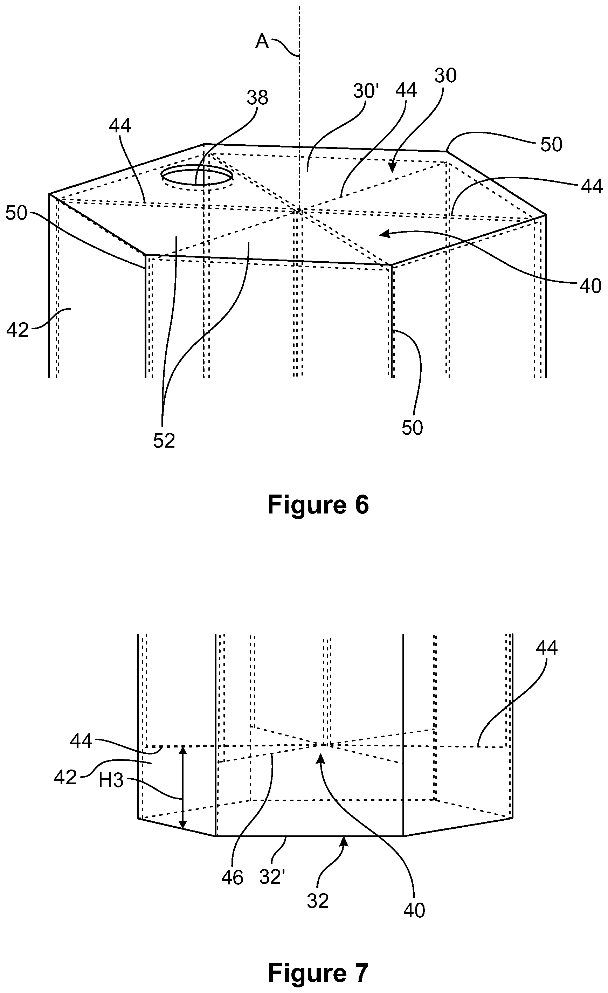

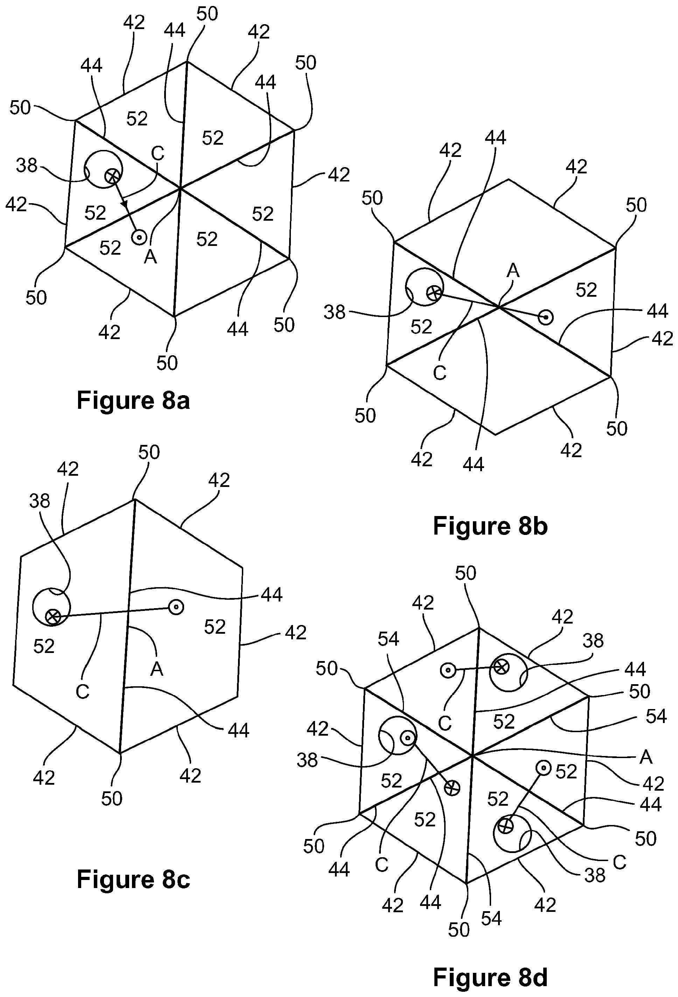

On entend par « cloisons jointives », au moins deux cloisons internes 44 reliées entre elles au niveau de l'axe central A de la cellule polygonale tubulaire 36. Par exemple, la figure 8c illustre deux cloisons internes 44 (ou dit autrement deux demi-cloisons) reliées entre elles au niveau de l'axe central A, la figure 8b illustre quatre cloisons interne 44 reliées entre elles au niveau de l'axe central A et les figures 6, 7, 8a et 9 illustrent six cloisons internes 44 reliées entre elles au niveau de l'axe central A. Chaque cloison interne 44 des cloisons jointives peuvent s'étendre dans une direction transversale entre des faces internes 48 de deux parois latérales 42, entre deux arrêtes de jonction 50 ou entre une arrête de jonction 40 et une paroi latérale opposées.

C'est par exemple le cas de la configuration de la cellule hexagonale 36 des figures 4 à 8a-8c où chaque cloison 44 s'étend entre l'axe central A et une arête de jonction 50 de deux des parois latérales 42.

Dans le cas d'une cellule 36 ne comportant dans que des cloisons internes 44 identiques et ayant un nombre de parois latérales 42 qui est pair, comme c'est le cas d'une cellule de section hexagonale 36 telle que celle qui a été représentée aux figures 4 à 8a-8c, chaque cloison 44 est alignée avec une autre cloison 44 identique.

Dans l'exemple qui a été représenté ici, les cloisons internes s'étendent transversalement entre l'axe A et les arêtes 50 de jonction des parois latérales 40 en délimitant autant de poches 52 communiquant les unes avec les autres que de parois latérales 42.

Dans ce cas, chaque poche 52 communique avec toutes les autres et avec le trou 38.

La cellule 36 peut aussi comporter un nombre inférieur de cloisons 44 alternant avec des parois internes de même hauteur H1 que les parois latérales de la cellules 36 pour délimiter des paires de poches 52 associées chacune à un trou 38.

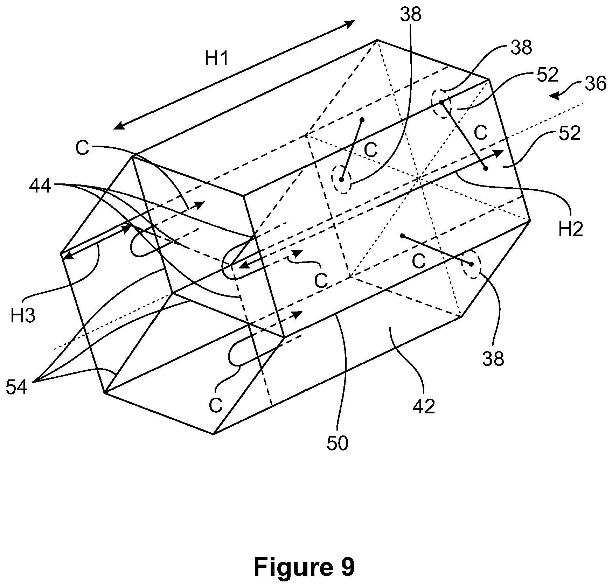

C'est le cas de la configuration des figures 8d et 9, qui représentent une cellule 36 comportant un nombre pair de parois latérales 42, deux fois moins de cloisons 44 que de parois latérales 42, et des parois internes 54 de même première hauteur H1 que les parois latérales 42, qui alternent autour de l'axe central A avec lesdites cloisons 44.

De cette manière, les cloisons 44 et les parois internes 54 délimitent des paires de poches adjacentes 52 communicantes (ici trois paires de poches communicantes 52, puisque la cellule 36 est de section hexagonale).

Chaque paire de poches communicantes 52 est isolée des autres paires de poches communicantes 52 et elle communique avec un trou 38 formé dans la première peau 30. La cellule 36 est donc alimentée par trois trous 36. Les paires de poches communicantes 52 sont en ce cas en nombre deux fois inférieur au nombre de parois latérales 42.

Quel que soit le mode de réalisation choisi ici, et de manière non limitative de l'invention, les ondes sonores cheminent donc dans cellule 36 selon un chemin C qui est de sensiblement deux fois la première hauteur H1 des parois latérales 42 de la cellule 36 et de sa cavité 40. Par conséquent, ce chemin devant, pour atténuer de manière satisfaisante les ondes sonores, être d'une longueur λ/4 égal au quart de la longueur d'onde émise, on peut donc proposer une cellule de première hauteur H1 égale au huitième de la longueur d'onde λ du son à atténuer, soit λ/8.

A titre d'exemple, la première hauteur H1 est comprise entre 20 et 50 mm.

La deuxième hauteur H2, quant à elle, est supérieure à la moitié de la première hauteur H1 et au moins inférieure ou égale de 5mm à la première hauteur H1.

Par conséquent, on peut donc préférentiellement bénéficier d'une âme 34 deux fois moins épaisse qu'une âme conventionnelle 34.

L'âme 34 peut être obtenue de différentes manières en fonction de son matériau.

Si celui-ci est métallique ou thermoplastique, les cellules 36 de l'âme 34, les parois latérales 42 , et l'au moins une cloison interne 44, voire les parois internes 54 peuvent être obtenues par un procédé de fabrication additive.

Toutefois, pour un matériau thermoplastique il est plus économique que les cellules de l'âme 34 et les parois latérales 42 soient obtenues en une étape par extrusion d'un matériau plastique, que l'au moins une cloison interne 44 voire l'au moins une paroi interne 54 soit obtenue aussi mais indépendamment dans une autre étape par extrusion d'un matériau plastique, puis qu'au moins une cloison interne 44 et/ou l'au moins une paroi interne 54 soient rapportées et soudées dans chaque cellule 36.

Les cellules 36 de l'âme 34 peuvent encore être obtenues par fourniture d'un matériau en nid d'abeilles conventionnel dans lequel on dispose au moins un insert formant l'au moins une cloison 44.

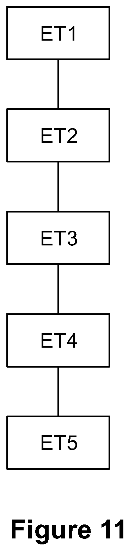

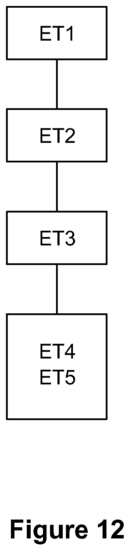

Dans cette configuration, comme l'illustrent les figures 11 et 12, on peut fabriquer un panneau d'atténuation 28 du type décrit précédemment selon un procédé comportant une première étape ET1 de fabrication de la première peau 30.

Dans une deuxième étape ET2, on fabrique la deuxième peau 32.

Dans une troisième étape ET3 on fabrique l'âme 34 par fabrication additive, par extrusion et soudage, ou par fourniture d'un matériau en nid d'abeilles conventionnel dans lequel on dispose des inserts formant les cloisons internes 44.

Le procédé comporte aussi une quatrième étape ET4 de fixation des première et deuxième peaux 30, 32 à l'âme 34 par soudage, brasage, ou collage.

Il convient de noter que la quatrième étape peut être effectuée de différentes façons. Il est possible rapporter les première et deuxième peaux 30, 32 sur l'âme 34, ou bien de rapporter d'abord l'âme 34 sur une des deux peaux 30, 32, puis de rapporter l'autre peau 32 ou 30 sur l'âme 34.

Dans un première variante de ce procédé, comme représenté à la figure 11, celui-ci suit l'ordre numéraire des étapes et c'est donc à l'issue la quatrième étape ET4 que le procédé comporte une cinquième étape ET5 de perçage ou poinçonnage de la première peau 30, qui permet de réaliser dans ladite première peau 30 les trous 38 qui débouchent chacun dans une poche 52 d'une cellule polygonale 36 de l'âme 34.

En variante, le procédé peut voir intervenir une étape ET5 de perçage ou poinçonnage de la première peau 30 au cours de l'étape ET4 avant l'assemblage final, des deux peaux 30, 32, ce perçage ou poinçonnage pouvant intervenir avec la peau 30 assemblée à l'âme 34 si elle est la première à y être assemblée, ou pouvant intervenir sur la peau 30 seule nue, préalablement à son assemblage avec l'âme 34 déjà assemblée à la peau 32.

Quel que soit la variante retenue, il n'est pas nécessaire de chercher à positionner les trous 38 de la première peau 30 par rapport aux cellules 36. Il suffit que le motif de perçage ou de poinçonnage soit régulier et que le pas entre les trous 38 soit défini correctement pour que le perçage de la peau 30 génère statistiquement suffisamment de trous 38 placés de manière adéquate pour communiquer avec un nombre suffisant de poches 50.

L'invention permet donc de disposer d'une turbomachine ou d'une nacelle de turbomachine 10 comportant au moins une veine de flux gazeux F, P, S délimitée par au moins une paroi comportant un panneau 28 du type décrit précédemment. L'usage de tels panneaux 28 permet de les utiliser dans des turbomachines plus compactes.

## Revendications

1. Panneau d'atténuation acoustique (28) pour une turbomachine ou une nacelle de turbomachine (10) d'aéronef, ledit panneau (28) comportant une première peau (30), une deuxième peau (32), et une âme (34) prise en sandwich entre les première et deuxième (30, 32) peaux, ladite âme comportant une pluralité de cellules polygonales tubulaires (36) qui ont chacune une orientation (A) perpendiculaire aux première et deuxième peaux (30, 32), chaque cellule (36) comportant une cavité interne (40) qui communique avec au moins un trou (38) formé dans ladite première peau (30) et qui est délimitée par des parois latérales (42) s'étendant entre les première et deuxième peaux (30, 32) et perpendiculairement aux première et deuxième peaux (32), ces parois latérales (42) ayant une première hauteur (H1) égale à une distance entre les première et deuxième peaux (30, 32),
chaque cellule polygonale (36) comporte en outre au moins une cloison interne (44) à l'intérieur de sa cavité (40), cette cloison interne (44) s'étendant à partir de la première peau (30) perpendiculairement aux première et deuxième peaux (30, 32) selon une deuxième hauteur (H2) inférieure à la première hauteur (H1), et transversalement dans la cavité (40) entre deux parois latérales (42) de la cellule (36), cette cloison interne (44) divisant la cavité (40) en au moins deux poches adjacentes (52) et délimitant entre une extrémité libre (46) de ladite cloison (44) et la deuxième peau (32) un passage permettant auxdites au moins deux poches adjacentes (52) de communiquer entre elles et avec ledit trou (38),
chaque cellule polygonale (36) est une cellule polygonale régulière ayant un axe central (A) et **caractérisé en ce qu'**elle comporte au moins deux cloisons (44) jointives selon ledit axe central (A).

2. Panneau d'atténuation acoustique (28) selon la revendication 1, **caractérisé en ce que** ladite au moins deux cloisons (44) s'étend transversalement entre des faces internes (48) de deux parois latérales (42) opposées de la cellule (36).

3. Panneau d'atténuation acoustique (28) selon la revendication 1, **caractérisé en ce que** ladite au moins deux cloisons (44) s'étend transversalement entre une arête de jonction de première et deuxième parois latérales et une troisième paroi latérale opposée aux première et deuxième parois latérales.

4. Panneau d'atténuation acoustique (28) selon la revendication 1, **caractérisé en ce que** ladite au moins deux cloisons (44) s'étend transversalement entre une arête de jonction (50) de première et deuxième parois latérales (42) et une arête de jonction (50) de troisième et quatrième parois latérales (42).

5. Panneau d'atténuation acoustique (28) selon l'une quelconque des revendications précédentes, **caractérisé en ce que** chaque cellule polygonale (36) est une cellule hexagonale.

6. Panneau d'atténuation acoustique (28) selon l'une quelconque des revendications précédentes, **caractérisé en ce que** chaque cellule (36) comporte autant de cloisons internes (44) jointives selon l'axe central (A) que de parois latérales (42).

7. Panneau d'atténuation acoustique (28) selon l'une quelconque des revendications précédentes, **caractérisé en ce que** chaque cellule (36) comporte un nombre pair de parois latérales (42) et **en ce que** les cloisons internes (44) s'étendent transversalement entre ledit axe (A) et les arêtes (50) de jonction des parois latérales (42) en délimitant autant de poches (52) communiquant les unes avec les autres que de parois latérales (42).

8. Panneau d'atténuation acoustique (28) selon l'une quelconque des revendications précédentes, **caractérisé en ce que** chaque cellule (36) comporte un nombre pair de parois latérales (42), deux fois moins de cloisons (44) que de parois latérales (44), et des parois internes (54) de même première hauteur (H1) que les parois latérales (44), qui alternent autour de l'axe central (A) avec lesdites cloisons (44) de manière à délimiter des paires de poches adjacentes (52) communicantes, chaque paire de poches communicantes (52) étant isolée des autres paires de poches communicantes (52) et communiquant avec un trou (38) de la première peau (30), les paires de poches communicantes (52) étant en nombre deux fois inférieur au nombre de parois latérales (42).

9. Panneau d'atténuation acoustique (28) selon l'une des revendications précédentes, **caractérisé en ce que** la première hauteur (H1) est égale au huitième d'une longueur d'onde d'un son à atténuer.

10. Panneau d'atténuation acoustique (28) selon l'une des revendications précédentes, **caractérisé en ce que** la première hauteur (H1) est comprise entre 20 et 50 mm.

11. Panneau d'atténuation acoustique (28) selon l'une des revendications précédentes, **caractérisé en ce que** la deuxième hauteur (H2) est supérieure à la moitié de la première hauteur (H1) et au moins inférieure ou égale de 5 mm à la première hauteur (H1).

12. Procédé de fabrication d'un panneau d'atténuation acoustique (28) selon l'une des revendications précédentes, **caractérisé en ce qu'**il comporte :
- une première étape (ET1) de fabrication d'une première peau (30),
- une deuxième étape (ET2) de fabrication d'une deuxième peau (32),
- une troisième étape (ET3) de fabrication de l'âme (34) par fabrication additive, par extrusion et soudage, ou par fourniture d'un matériau en nid d'abeilles conventionnel dans lequel on dispose au moins un insert formant l'au moins une cloison (44),
- une quatrième étape (ET4) de fixation des première et deuxième peau (30, 32) à l'âme (34) par soudage, brasage, ou collage, et
- une cinquième étape (ET5) de perçage de la première peau (30) réalisant dans ladite première peau (30) des trous (38) qui débouchent statistiquement chacun dans une poche (52) d'une cellule polygonale (36) de l'âme.

13. Turbomachine (10) **caractérisée en ce qu'**elle comporte au moins une veine de flux gazeux (F, P, S) délimitée par au moins une paroi comportant un panneau d'atténuation acoustique (28) selon l'une des revendications 1 à 11.

## Patentansprüche

1. Akustisches Dämfungspanel (28) für eine Turbomaschine oder eine Turbomaschinengondel (10) eines Luftfahrzeugs, wobei das Panel (28) eine erste Haut (30), eine zweite Haut (32) und einen Kern (34) umfasst, der zwischen der ersten und der zweiten Haut (30, 32) sandwichartig aufgenommen ist, wobei der Kern eine Vielzahl von röhrenförmigen polygonalen Zellen (36) umfasst, die jeweils eine zu der ersten und der zweiten Haut (30, 32) senkrechte Ausrichtung (A) aufweisen, wobei jede Zelle (36) einen Innenhohlraum (40) umfasst, der mit mindestens einem Loch (38), das in der ersten Haut (30) gebildet ist, kommuniziert und der durch Seitenwände (42) begrenzt ist, die sich zwischen der ersten und der zweiten Haut (30, 32) und senkrecht zu der ersten und der zweiten Haut (32) erstrecken, wobei diese Seitenwände (42) eine erste Höhe (H1) aufweisen, die gleich einem Abstand zwischen der ersten und der zweiten Haut (30, 32) ist,
wobei jede polygonale Zelle (36) weiter umfasst mindestens eine innere Trennwand (44) innerhalb ihres Hohlraums (40), wobei sich diese innere Trennwand (44) von der ersten Haut (30) senkrecht zu der ersten und der zweiten Haut (30, 32) über eine zweite Höhe (H2), die kleiner ist als die erste Höhe (H1), und quer in dem Hohlraum (40) zwischen zwei Seitenwänden (42) der Zelle (36) erstreckt, wobei diese innere Trennwand (44) den Hohlraum (40) in mindestens zwei aneinandergrenzende Taschen (52) unterteilt und zwischen einem freien Ende (46) der Trennwand (44) und der zweiten Haut (32) einen Durchgang begrenzt, der es den mindestens zwei aneinandergrenzenden Taschen (52) ermöglicht, miteinander und mit dem Loch (38) zu kommunizieren,
wobei jede polygonale Zelle (36) eine regelmäßige polygonale Zelle ist, die eine Mittelachse (A) aufweist, und **dadurch gekennzeichnet ist, dass** sie mindestens zwei Trennwände (44) umfasst, die entlang der Mittelachse (A) aneinanderstoßen.

2. Akustisches Dämfungspanel (28) nach Anspruch 1, **dadurch gekennzeichnet, dass** sich die mindestens zwei Trennwände (44) quer zwischen Innenseiten (48) zweier gegenüberliegender Seitenwände (42) der Zelle (36) erstrecken.

3. Akustisches Dämfungspanel (28) nach Anspruch 1, **dadurch gekennzeichnet, dass** sich die mindestens zwei Trennwände (44) quer zwischen einer Verbindungskante der ersten und der zweiten Seitenwand und einer der ersten und zweiten Seitenwand gegenüberliegenden dritten Seitenwand erstrecken.

4. Akustisches Dämfungspanel (28) nach Anspruch 1, **dadurch gekennzeichnet, dass** sich die mindestens zwei Trennwände (44) quer zwischen einer Verbindungskante (50) der ersten und der zweiten Seitenwand (42) und einer Verbindungskante (50) der dritten und der vierten Seitenwand (42) erstrecken.

5. Akustisches Dämfungspanel (28) nach einem der vorstehenden Ansprüche, **dadurch gekennzeichnet, dass** jede polygonale Zelle (36) eine sechseckige Zelle ist.

6. Akustisches Dämfungspanel (28) nach einem der vorstehenden Ansprüche, **dadurch gekennzeichnet, dass** jede Zelle (36) ebenso viele entlang der Mittelachse (A) aneinanderstoßende innere Trennwände (44) wie Seitenwände (42) umfasst.

7. Akustisches Dämfungspanel (28) nach einem der vorstehenden Ansprüche, **dadurch gekennzeichnet, dass** jede Zelle (36) eine gerade Anzahl von Seitenwänden (42) umfasst und dadurch, dass sich die inneren Trennwände (44) quer zwischen der Achse (A) und den Verbindungskanten (50) der Seitenwände (42) erstrecken, wobei sie ebenso viele miteinander kommunizierende Taschen (52) begrenzen, wie es Seitenwände (42) gibt.

8. Akustisches Dämfungspanel (28) nach einem der vorstehenden Ansprüche, **dadurch gekennzeichnet, dass** jede Zelle (36) eine gerade Anzahl von Seitenwänden (42), zweimal weniger Trennwände (44) als Seitenwände (44), und Innenwände (54) derselben ersten Höhe (H1) wie die Seitenwände (44) umfasst, welche sich um die Mittelachse (A) herum mit den Trennwänden (44) abwechseln, um Paare aneinandergrenzender, kommunizierender Taschen (52) zu begrenzen, wobei jedes Paar kommunizierender Taschen (52) von den anderen Paaren kommunizierender Taschen (52) isoliert ist und mit einem Loch (38) der ersten Haut (30) kommuniziert, wobei die Paare kommunizierender Taschen (52) zahlenmäßig zweimal kleiner sind als die Anzahl der Seitenwände (42).

9. Akustisches Dämfungspanel (28) nach einem der vorstehenden Ansprüche, **dadurch gekennzeichnet, dass** die erste Höhe (H1) gleich dem Achtel einer Wellenlänge eines zu dämpfenden Schalls ist.

10. Akustisches Dämfungspanel (28) nach einem der vorstehenden Ansprüche, **dadurch gekennzeichnet, dass** die erste Höhe (H1) zwischen 20 und 50 mm liegt.

11. Akustisches Dämfungspanel (28) nach einem der vorstehenden Ansprüche, **dadurch gekennzeichnet, dass** die zweite Höhe (H2) größer als die Hälfte der ersten Höhe (H1) und mindestens um 5 mm kleiner oder gleich der ersten Höhe (H1) ist.

12. Verfahren zum Herstellen einer Akustisches Dämfungspanel (28) nach einem der vorstehenden Ansprüche, **dadurch gekennzeichnet, dass** es umfasst:
- einen ersten Schritt (ET1) des Herstellens einer ersten Haut (30),
- einen zweiten Schritt (ET2) des Herstellens einer zweiten Haut (32),
- einen dritten Schritt (ET3) des Herstellens des Kerns (34) durch additive Fertigung, durch Extrusion und Schweißen, oder durch Bereitstellen eines herkömmlichen Wabenmaterials, in dem mindestens ein Einsatz angeordnet wird, der die mindestens eine Trennwand (44) bildet,
- einen vierten Schritt (ET4) des Befestigens der ersten und der zweiten Haut (30, 32) am Kern (34) durch Schweißen, Löten oder Kleben, und
- einen fünften Schritt (ET5) des Bohrens der ersten Haut (30), wobei in der ersten Haut (30) Löcher (38) angefertigt werden, die statistisch jeweils in eine Tasche (52) einer polygonalen Zelle (36) des Kerns münden.

13. Turbomaschine (10), **dadurch gekennzeichnet, dass** es mindestens eine Gasstromader (F, P, S) umfasst, die durch mindestens eine Wand begrenzt ist, die eine Akustisches Dämfungspanel (28) nach einem der Ansprüche 1 bis 11 umfasst.

## Claims

1. A sound attenuation panel (28) for an aircraft turbomachine or turbomachine nacelle (10), said panel (28) comprising a first skin (30), a second skin (32), and a core (34) sandwiched between the first and second skins (30, 32), said core comprising a plurality of tubular polygonal cells (36) which each have an orientation (A) perpendicular to the first and second skins (30, 32), each cell (36) comprising an internal cavity (40) which communicates with at least one hole (38) formed in said first skin (30) and which is delimited by side walls (42) extending between the first and second skins (30, 32) and perpendicularly to the first and second skins (32), these side walls (42) having a first height (H1) equal to a distance between the first and second skins (30, 32),
each polygonal cell (36) further comprises at least one internal partition (44) inside its cavity (40), this internal partition (44) extending from the first skin (30) perpendicularly to the first and second skins (30, 32) at a second height (H2) less than the first height (H1), and transversely in the cavity (40) between two side walls (42) of the cell (36), this internal partition (44) dividing the cavity (40) into at least two adjacent pockets (52) and delimiting between a free end (46) of said partition (44) and the second skin (32) a passage allowing said at least two adjacent pockets (52) to communicate with each other and with said hole (38),
each polygonal cell (36) is a regular polygonal cell having a central axis (A) and **characterised in that** it comprises at least two partitions (44) joined along said central axis (A).

2. The sound attenuation panel (28) according to claim 1, **characterised in that** said at least two partitions (44) extend transversely between internal faces (48) of two opposite side walls (42) of the cell (36).

3. The sound attenuation panel (28) according to claim 1, **characterised in that** said at least two partitions (44) extend transversely between an edge joining first and second side walls and a third side wall opposite the first and second side walls.

4. The sound attenuation panel (28) according to claim 1, **characterised in that** said at least two partitions (44) extend transversely between an edge (50) joining first and second side walls (42) and an edge (50) joining third and fourth side walls (42).

5. The sound attenuation panel (28) according to any one of the preceding claims, **characterised in that** each polygonal cell (36) is a hexagonal cell.

6. The sound attenuation panel (28) according to any one of the preceding claims, **characterised in that** each cell (36) comprises as many internal partitions (44) joined along the central axis (A) as there are side walls (42).

7. The sound attenuation panel (28) according to any one of the preceding claims, **characterised in that** each cell (36) comprises an even number of side walls (42) and **in that** the internal partitions (44) extend transversely between said axis (A) and the edges (50) joining the side walls (42), delimiting as many pockets (52) communicating with one another as there are side walls (42).

8. The sound attenuation panel (28) according to any one of the preceding claims, **characterised in that** each cell (36) comprises an even number of side walls (42), half as many partitions (44) as side walls (44), and internal walls (54) of the same first height (H1) as the side walls (44), which alternate about the central axis (A) with said partitions (44) so as to delimit pairs of adjacent communicating pockets (52), each pair of communicating pockets (52) being isolated from the other pairs of communicating pockets (52) and communicating with a hole (38) in the first skin (30), the number of pairs of communicating pockets (52) being half the number of side walls (42).

9. The sound attenuation panel (28) according to one of the preceding claims, **characterised in that** the first height (H1) is equal to one eighth of a wavelength of a sound to be attenuated.

10. The sound attenuation panel (28) according to one of the preceding claims, **characterised in that** the first height (H1) is between 20 and 50 mm.

11. The sound attenuation panel (28) according to one of the preceding claims, **characterised in that** the second height (H2) is greater than half the first height (H1) and at least 5 mm less than or equal to the first height (H1).

12. A method of manufacturing a sound attenuation panel (28) according to one of the preceding claims, **characterised in that** it comprises:
- a first step (ET1) of manufacturing a first skin (30),
- a second step (ET2) of manufacturing a second skin (32),
- a third step (ET3) of manufacturing the core (34) by additive manufacturing, by extrusion and welding, or by supplying a conventional honeycomb material in which at least one insert forming said at least one partition (44) is arranged,
- a fourth step (ET4) of fixing the first and second skins (30, 32) to the core (34) by welding, brazing or gluing, and
- a fifth step (ET5) of drilling the first skin (30), producing holes (38) in said first skin (30), each of which opens statistically into a pocket (52) of a polygonal cell (36) of the core.

13. A turbomachine (10), **characterised in that** it comprises at least one gas flow duct (F, P, S) delimited by at least one wall comprising a sound attenuation panel (28) according to one of claims 1 to 11.
